# EUROPEAN PATENT APPLICATION

(11) **EP 4 642 100 A1**
(43) Date of publication of application: **29.10.2025**
(21) Application number: 22968863.5
(22) Date of filing: 20.12.2022
(51) Int. Cl.: H04W 48/00

(54) **CREDIBILITY DETERMINATION METHOD FOR USER POSITION INFORMATION, AND APPARATUS THEREFOR**

(71) Applicant: Beijing Xiaomi Mobile Software Co., Ltd., Beijing 100085 (CN)
(72) Inventor: MAO, Yuxin, Beijing 100085 (CN)
(74) Representative: Dehns Germany Partnerschaft mbB
(86) International application number: PCT/CN2022/140501
(87) International publication number: WO 2024/130561

(57) **Abstract**

Disclosed in the embodiments of the present application are a credibility determination method for user position information, and an apparatus therefor, which can be applied to communication systems such as the long term evolution (LTE) system, the 5th generation (5G) mobile communication system, the 5G new radio (NR) system, or other future novel mobile communication systems. The method comprises: acquiring user position information of a terminal device; and determining whether the user position information is credible. Implementing the embodiments of the present application can determine, by means of the transmission subject, the source, the trajectory and the analysis result of the user position information, whether the user position information is credible, thereby helping to improve the credibility of the position information and more accurately acquire the positions of UEs.

## Description

### TECHNICAL FIELD

The disclosure relates to the field of communication technology, in particular to a method for determining reliability of user location information and an apparatus.

### BACKGROUND

In wireless communications, 3rd Generation Partnership Project (3GPP) R17 has proposed to support using a satellite network as the 5G access network to access the terrestrial 5G core network together with the terrestrial 5G access network, so that terminal that supports both the satellite and the 5G access can use 5G network services through the satellite access or the terrestrial 5G access. Location information representing a user equipment (UE) is generated according to information reported by the UE, which may be used by a user for location verification through the satellite access. However, the location information cannot represent an actual location of the user (for example, the UE may send false or inaccurate location information), and if user location verification is performed based on the above location information, there will be a problem that the verification process is invalid, which may lead to illegal access of the user to the operating network.

However, there is still a lack of effective means to determine whether the user location information is reliable.

### SUMMARY

The embodiments of the disclosure provide a method for determining reliability of user location information and a communication apparatus, which may be applied to a long term evolution (LTE) system, a 5th generation (5G) mobile communication system, a 5G new radio (NR) system, or other future new mobile communication systems. Whether user location information is reliable is determined through a sending entity, a source, a trajectory and an analytics result of the user location information, which is beneficial to increasing reliability of the user location information and obtaining a location of the UE more accurately.

According to a first aspect of embodiments of the disclosure, a method for determining reliability of user location information is provided. The method is performed by a first network element, and includes:
obtaining user location information of a terminal; and
determining whether the user location information is reliable.

In an embodiment, determining whether the user location information is reliable based on at least one of:
a sending entity of the user location information;
a source of the user location information;
a trajectory corresponding to the user location information; or
an analytics result of the user location information.

In an embodiment, the method further includes:
in response to determining that the user location information is reliable, performing user location verification based on the user location information.

In an embodiment, the method further includes:
in response to determining that the user location information is not reliable, obtaining reliable location information of the terminal through a positioning procedure; and
performing, according to the reliable location information, user location verification for the terminal accessing to a current network.

In an embodiment, obtaining the user location information of the terminal, includes:
receiving information for identifying a location of the terminal sent by a base station.

In an embodiment, the first network element is selected from at least one of:
an access and mobility management function (AMF);
a mobility management entity (MME); or
a network data analytics function (NWDAF).

In an embodiment, in a case where the first network element is the AMF or the MME, the method includes at least one of:
in a case where a sending entity of the user location information is the terminal, determining that the user location information is not reliable; or
in a case where a source of the user location information is the terminal, determining that the user location information is not reliable.

In an embodiment, in a case where the first network element is the NWDAF, the method includes:
receiving the user location information sent by a second network element, determining whether the user location information is reliable, and generating an analytics result of the user location information; and
sending the analytics result of the user location information to the second network element, in which the second network element is configured to determine whether the user location information is reliable according to the analytics result.

In an embodiment, in a case where the first network element is the AMF or the MME, the method includes:
sending the user location information to a second network element, in which the second network element is configure to determine whether the user location information is reliable and generate an analytics result of the user location information; and
receiving the analytics result of the user location information sent by the second network element, or determining whether the user location information is reliable according to the analytics result.

In an embodiment, in a case where the second network element is an AMF or an MME, the method includes at least one of:
in a case where a sending entity of the user location information is the terminal, determining that the user location information is not reliable; or
in a case where a source of the user location information is the terminal, determining that the user location information is not reliable.

In an embodiment, obtaining the reliable location information of the terminal through the positioning procedure, includes:
sending a positioning request to an LMF, and indicating that the user location information is used for location verification, so as to obtain the reliable location information of the terminal.

According to a second aspect of embodiments of the disclosure, a method for determining reliability of user location information is provided. The method is performed by a terminal, and includes:
sending user location information of the terminal to a first network element, so that the first network element can determine whether the user location information is reliable.

According to a third aspect of embodiments of the disclosure, a communication apparatus is provided. The communication apparatus has an ability to implement part or all of the functions of the terminal in the method described in the first aspect. For example, the communication apparatus may have functions in some or all of embodiments of the disclosure, or may have functions of independently implementing any embodiment of the disclosure. The functions may be implemented by hardware, or by executing corresponding software using the hardware. The hardware or software includes one or more units or modules corresponding to the above functions.

In an implementation, the communication apparatus includes: a transceiver module and a processing module. The processing module is configured to support the communication apparatus to perform corresponding functions in the above method. The transceiver module is configured to support communication between the communication apparatus and other devices. The communication apparatus may further include a storage module coupled to the transceiver module and the processing module, which is configured to store necessary computer programs and data for the communication apparatus.

As an example, the processing module may be a processor, the transceiver module may be a transceiver or a communication interface, and the storage module may be a memory. In an implementation, the communication apparatus includes:
a transceiver module, configured to obtain user location information of a terminal; and
a processing module, configured to determine whether the user location information is reliable.

According to a fourth aspect of embodiments of the disclosure, a communication apparatus is provided. The communication apparatus has an ability to implement part or all of the functions of the terminal in the method described in the second aspect. For example, the apparatus may have functions of some or all of embodiments of the disclosure, or may have a function of independently implementing any embodiment of the disclosure. The functions may be implemented by hardware, or by executing corresponding software using the hardware. The hardware or software includes one or more units or modules corresponding to the above functions.

In an implementation, the communication apparatus includes: a transceiver module and a processing module. The processing module is configured to support the communication apparatus to perform corresponding functions in the above method. The transceiver module is configured to support communication between the communication apparatus and other devices. The communication apparatus may further include a storage module coupled to the transceiver module and the processing module, which is configured to store necessary computer programs and data for the communication apparatus.

As an example, the processing module may be a processor, the transceiver module may be a transceiver or a communication interface, and the storage module may be a memory. In an implementation, the communication apparatus includes:
a transceiver module, configured to send the user location information of the terminal to a first network element, so that the first network element can determine whether the user location information is reliable.

According to a fifth aspect of embodiments of the disclosure, a communication apparatus is provided. The communication apparatus includes: a processor. When the processor calls computer programs stored in a memory, the method described in the first aspect or the second aspect is implemented.

According to a sixth aspect of embodiments of the disclosure, a communication apparatus is provided. The communication apparatus includes: a processor and a memory having computer programs stored thereon. When the processor executes the computer programs stored in the memory, the communication apparatus is caused to implement the method described in the first aspect or the second aspect.

According to a seventh aspect of embodiments of the disclosure, a communication apparatus is provided. The communication apparatus includes: a processor and an interface circuit. The interface circuit is configured to receive code instructions and transmit the code instructions to the processor. The processor is configured to run the code instructions to cause the apparatus to perform the method described in the first aspect or the second aspect.

According to an eighth aspect of embodiments of the disclosure, a system for determining reliability of user location information is provided. The system includes the communication apparatus of the third aspect or the communication apparatus of the fourth aspect. Or, the system includes the communication apparatus of the fifth aspect. Or, the system includes the communication apparatus of the sixth aspect. Or, the system includes the communication apparatus of the seventh aspect.

According to a ninth aspect of embodiments of the disclosure, a computer readable storage medium is provided. The computer readable storage medium is configured to store instructions used by the above terminal. When the instructions are executed, the terminal is caused to implement the method of the first aspect or the second aspect.

According to a tenth aspect of embodiments of the disclosure, a computer program product including computer programs is provided. When the computer programs are run by a computer, the computer is caused to implement the method of the first aspect or the second aspect.

According to an eleventh aspect of embodiments of the disclosure, a chip system is provided. The chip system includes at least one processor and an interface for supporting the terminal in realizing the functions involved in the first aspect or the second aspect, e.g., determining or processing at least one of data or information involved in the method described above. In a possible design, the chip system further includes a memory. The memory is configured to store necessary computer programs and data of the terminal. The chip system may consist of chips or may include a chip and other discrete components.

According to a twelfth aspect of embodiments of the disclosure, a computer program is provided. When the computer program is running on a computer, the computer is caused to implement the method of the first aspect or the second aspect.

### BRIEF DESCRIPTION OF THE DRAWINGS

In order to more clearly explain the technical solution in embodiments of the disclosure or the background technology, the drawings used in the embodiments of the disclosure or the background technology will be explained below.
FIG. 1 is a schematic diagram of a communication system according to an embodiment of the disclosure.
FIG. 2 is a flowchart of a method for determining reliability of user location information according to an embodiment of the disclosure.
FIG. 3 is a flowchart of a method for determining reliability of user location information according to an embodiment of the disclosure.
FIG. 4 is a flowchart of a method for determining reliability of user location information according to an embodiment of the disclosure.
FIG. 5 is a flowchart of a method for determining reliability of user location information according to an embodiment of the disclosure.
FIG. 6 is a flowchart of a method for determining reliability of user location information according to an embodiment of the disclosure.
FIG. 7 is a flowchart of a method for determining reliability of user location information according to an embodiment of the disclosure.
FIG. 8 is a schematic diagram of a communication apparatus according to an embodiment of the disclosure.
FIG. 9 is a schematic diagram of another communication apparatus according to another embodiment of the disclosure.
FIG. 10 is a schematic diagram of a chip according to an embodiment of the disclosure.

### DETAILED DESCRIPTION

To facilitate understanding, the terms involved in the disclosure are introduced first.

### 1. Access and mobility management function (AMF)

The AMF serves as the termination for both a random access network (RAN) control plane interface (N2) and a non-access stratum (NAS) (N1) protocol, which provides encryption and integrity protection for NAS. Main functions of the AMF further include: access authorization and authentication, connection management, mobility management, etc. In a scenario involving interoperation with an evolved packet system (EPS), the AMF is responsible for allocating of EPS bearer IDs.

### 2. Mobility management entity (MME)

The MME is a key control node in a long term evolution (LTE) access network under 3GPP protocols. The MME is responsible for locating and paging processes (including relaying) for a user equipment (UE) in an idle mode. In essence, the MME is responsible for signaling processing. It involves a bearer activation/deactivation process, and when a UE is initialized and connected, the MME selects a serving gateway (SGW) for the UE. The MME authenticates a user through interaction with a home subscriber server (HSS), and assigns the user with a temporary ID. The MME also supports lawful interception and monitoring. The MME provides a control function interface for 2G/3G access networks through an S3 interface. For roaming UEs, an S6a interface is provided facing the HSS.

Functions of the MME mainly include:
1) access control, including security and admission control.
2) mobility management. A mobile network must be aware of current location information of a user, and an EPC network is no exception. A location area (LA) in the EPC network is called a tracking area (TA), which is similar to a LA managed by a Microsoft cluster service (MSCS) and a routing area (RA) managed by a serving general packet radio service (GPRS) support node (SGSN), and is used for user mobility management for an EPC system. Depending on the scenario, it may be classified as: location update between different eNodeBs in the same MME, location update between different MMEs, periodic location update, etc. The successful result of all location updates is that the terminal notifies the network of its current TA, which is recorded in the MME and HSS.
3) Attachment and detachment. Before performing actual services, the terminal must complete a registration process in the network, which is called attachment. The terminal that has completed the attachment process successfully will obtain an IP address assigned by the network, and will be provided with a "permanently online" IP connection. Different from traditional 2/3G networks, the EPS network directly establishes a default bearer for the user by initializing the attachment, while users of 2/3G networks are assigned IP addresses only during the process of activating PDP context after the attachment.
   When the terminal does not need or cannot continue to attach to the network, it will initiate a detachment process. According to different initiators, the detachment process may be initiated by a UE, an MME or an HSS. An MME-initiated detachment may occur due to the terminal's prolonged lack of interaction with the network, while an HSS-initiated detachment is caused by reasons such as user subscription or billing information, where the network actively disconnects from the terminal. According to whether the detachment has successfully notified the terminal, it is further classified into explicit detachment and implicit detachment. The former refers to mutual signaling notification between parties, and the latter refers to a situation that the network actively initiates, but cannot notify the terminal due to limitations of radio conditions.
4) Session management function, which includes establishment, modification, and release of EPC bearers. When interacting with 2G/3G networks, effective mapping between PDP contexts and EPC contexts is completed, establishment and release of access network bearer are realized, and a suitable router is selected according to an access point name (APN) and subscriber contract data.
5) Selection of SGW and public data network gateway (PGW). When the user has a data service request, the MME needs to select an SGW/PGW and forward a user data packet.

Generally, the MME is similar to a control plane function of SGSN. Separating control plane functions of a network element from user plane functions is more conducive to deploying a flat network. In addition to the above functions such as mobility management function, the MME is also responsible for management of lawful interception, user roaming control and security authentication.

In order to better understand a method for determining reliability of user location information disclosed in the embodiments of the disclosure, a communication system applicable to the embodiments of the disclosure will be described first.

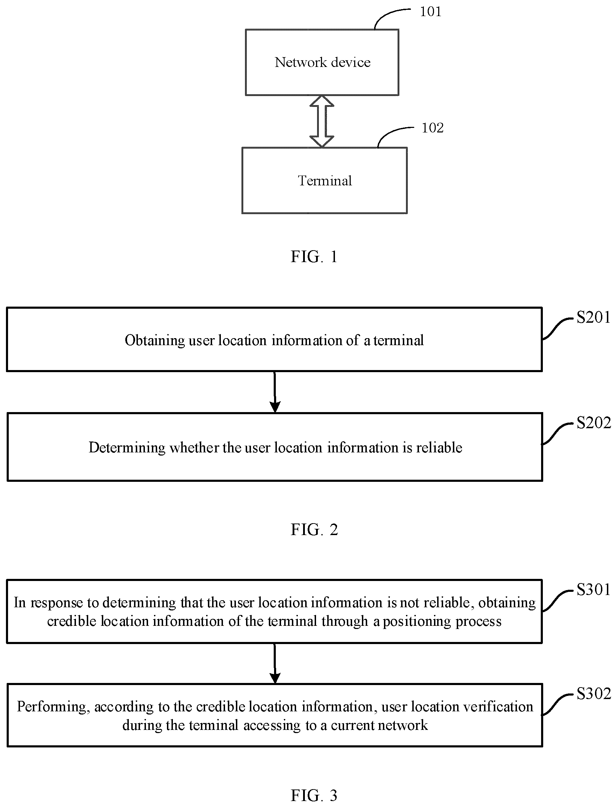

As illustrated in FIG. 1, FIG. 1 is a schematic diagram of a communication system according to an embodiment of the disclosure. The communication system may include, but is not limited to, one network device and one terminal. The number and the form of devices in FIG. 1 are only illustrated as examples and do not constitute a limitation on the embodiments of the disclosure, and two or more network devices and two or more terminals may be included in practical applications. The communication system illustrated in FIG. 1 includes, for example, one network device 101 and one terminal 102.

It is noteworthy that the technical solution of the embodiments of the disclosure may be applied to various communication systems, such as, an LTE system, a 5G mobile communication system, a 5G NR system, or other future new mobile communication systems. It should also be noted that sidelink in the embodiments of the disclosure may also be referred to as a side link or a direct link.

The network device 101 in the embodiments of the disclosure is an entity on a network side for transmitting or receiving signals. For example, the network device 101 may be an evolved NodeB (eNB), a transmission reception point (TRP), a next generation NodeB (gNB) in a NR system, a base station in other future mobile communication systems or an access node in a wireless fidelity (Wi-Fi) system. The specific technology and specific device form adopted by the network device are not limited in the embodiments of the disclosure. The network device according to the embodiments of the disclosure may be composed of a central unit (CU) and a distributed unit (DU). The CU may also be called control unit. The use of CU-DU structure allows to divide a protocol layer of the network device, such as a base station, such that some protocol layer functions are placed in the CU for centralized control, and some or all of the remaining protocol layer functions are distributed in the DU, which is centrally controlled by the CU.

The terminal 102 in the embodiments of the disclosure is an entity on a user side for receiving or transmitting signals, such as a cellular phone. The terminal may also be referred to as terminal, user equipment (UE), mobile station (MS), mobile terminal (MT), and the like. The terminal may be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiments of the disclosure.

When a UE accesses a 5G network through a satellite access mode, regulatory compliance requirements necessitate that the network verifies a location of a user to determine whether the user is allowed to access a public land mobile network (PLMN) selected by the UE at the current location. For example, since a satellite cell covers a larger area, the satellite cell may cover regions of both country A and country B (such as at a border of two countries where a satellite cell covers regions of both countries, and network operators of the two countries may share the satellite access, while the regulations of country B may strictly prohibit users from other countries from accessing its local operator's network in a non-roaming manner. In this case, if a user from country A located in the border area selects the network of country B for access through the satellite access, a network device of the operator in country B (such as the AMF) shall verify the location of the user and determines whether the user is within the territory of country B. If the user is not within the territory of country B, the user shall be prohibited from directly accessing (in the non-roaming manner) and using the network of country B. Therefore, when the network device verifies the user location, it needs to ensure that acquired user location information is reliable.

In related arts, the base station (e.g., gNB) reports a TA identity (TAI) representing a current location of the UE to the network device (e.g., AMF), so that the AMF perform user location verification based on the TAI. However, the TAI may be generated based on location information reported by the UE, for example, through global navigation satellite system (GNSS)/assisting-GNSS (A-GNSS). Information representing the location of the UE generated according to the information reported by the UE may not be reliable. That is, the user location information cannot represent the actual location of the user (for example, the UE may send false or inaccurate location information). If the user location verification is performed based on the above location information, there will be a problem that the verification process is invalid, which may lead to illegal access of the user to the operating network.

It is understandable that the communication system described in the embodiments of the disclosure is intended to clearly illustrate the technical solution of the embodiments of the disclosure, and does not constitute a limitation on the technical solution of the embodiments of the disclosure. It is understandable by those skilled in the art that as system architectures evolve and new business scenarios emerge, the technical solution provided by the embodiments of the disclosure are also applicable to similar technical problems.

A method for determining reliability of user location information and an apparatus thereof provided by the disclosure are introduced in detail in combination with the accompanying drawings below.

FIG. 2 is a flowchart of a method for determining reliability of user location information according to an embodiment of the disclosure. The method is performed by a first network element. As illustrated in FIG. 2, the method includes, but is not limited to the following steps.

At step S201, user location information of a terminal is obtained.

In the embodiments of the disclosure, the user location information of the terminal is used to indicate the location of the terminal for the first network element. The user location information may be information used for registration during a process of the terminal accessing a 5G network via a satellite, or information obtained through a locating procedure during a positioning procedure of the terminal and used for indicating the location of the terminal.

It should be noted that the user location information may be provided by the terminal or the base station. If the user location information is from the terminal, it is determined that the user location information is not reliable. If the user location information is from the base station, a source of the user location information needs to be checked. If the user location information is generated according to information provided by the terminal, it is determined that the user location information is not reliable.

In a possible embodiment, the user location information may be carried by a registration request signaling. The registration request signaling is sent to the first network element through the terminal or the base station, and the first network element parses the registration request signaling after receiving it to obtain the user location information therein.

In a possible embodiment, during the process of the terminal accessing the 5G network via the satellite, the terminal needs to send a registration request to the first network element. The specific implementation of this process is as follows: the terminal sends a registration request message to the base station, and the base station determines a TA where the terminal is located according to the registration request message and sends a TAI corresponding to the TA to the first network element together with the registration request message. The TAI may be used as the user location information identifying the location of the terminal.

At step S202, it is determined whether the user location information is reliable based on at least one of:
a sending entity of the user location information;
a source of the user location information;
a trajectory corresponding to the user location information; or
an analytics result of the user location information.

In the embodiments of the disclosure, the first network element determines whether the user location information is reliable to determine whether the user location information is accurate, and may determine the accurate location of the terminal according to the user location information.

In a possible embodiment, during the process of the terminal accessing the 5G network via the satellite, if the user location information is reliable and the location verification is passed based on the user location information, the registration request may be accepted. If the user location information is not reliable, the registration request may be accepted, and reliable location information shall be obtained. The location verification may be performed based on the reliable location information. If the verification fails, a deregistration process is initiated.

By implementing the embodiments of the disclosure, whether the user location information is reliable is determined through the sending entity, the source, the trajectory, and the analytics result of the user location information, which increases the reliability of location information and is beneficial to obtaining the location of the terminal more accurately.

It is determined whether the user location information is reliable based on at least one of:
the sending entity of the user location information;
the source of the user location information;
the trajectory corresponding to the user location information; or
the analytics result of the user location information.

In some possible embodiments, the first network element may receive UE information sent by the terminal. In detail, the first network element may determine whether the received user location information is reliable according to one or more of the sending entity of the user location information, the source of the user location information, the trajectory corresponding to the user location information and the analytics result of the user location information.

In an embodiment, the method further includes:
in response to determining that the user location information is reliable, performing user location verification based on the user location information.

In the embodiment of the disclosure, if the user location information is reliable, the first network element may perform the user location verification during the processing of the terminal accessing the current network according to the user location information.

In a possible embodiment, the first network element make a determination according to the user location information. If the terminal does not support access or is not covered by a network, the user location information is used to verify whether the terminal is in a legal operation area. If it is verified that the terminal is in the legal operation area, the terminal is allowed to access the current network and is provided with 5G network services. Alternatively, if it is verified that the terminal is in an illegal operation area, the terminal is denied access to the current network and is not provided with 5G network services, and a location verification result is fed back to the terminal. In some embodiments, the method may include but is not limited to the following steps.

In response to determining that the user location information is not reliable, reliable location information of the terminal is obtained through a positioning procedure.

In this embodiment, when it is determined that the user location information is not reliable, it indicates that the user location information cannot be used to determine the location of the terminal, and it is necessary to obtain the reliable location information through the positioning procedure.

In a possible embodiment, during the positioning procedure, a first network element (such as AMF) initiates a positioning request to a location management function (LMF) and obtains the reliable user location information from the LMF, and determines the location of the terminal according to the reliable user location information.

In a possible embodiment, if it is determined that the user location information is not reliable during the process of the terminal accessing the 5G network via the satellite, it is necessary to re-acquire the reliable location information of the terminal to perform the location verification based on the reliable location information.

According to the reliable location information, the user location verification is performed for the terminal accessing to a current network.

In this embodiment, after obtaining the reliable location information, the user location verification may be performed for the terminal accessing to the current network. After the user location verification, a registration process of the terminal may be performed.

In some embodiment, obtaining the user location information of the terminal includes:
receiving information of the terminal sent by a base station for identifying the location of the terminal.

In the embodiment of the disclosure, the generation process of the information for identifying the location of the terminal is as follows: after receiving the registration request message sent by the terminal, the base station determines the TA where the terminal is located according to the location information sent by the user and generates the TAI corresponding to the TA. The TAI is the information for identifying the location of the terminal.

In an embodiment, in a case where the first network element is an AMF or an MME, the method includes at least one of the following step (1) or step (2).
(1) In a case where the sending entity of the user location information is the terminal, it may be determined that the user location information is not reliable.

In the embodiments of the disclosure, in a case where the sending entity of the user location information is the terminal, it is determined that the user location information is not reliable.

Because the terminal may customize the user location information it sent, even if the actual location of the terminal is not within the legal operation area of the current network, the terminal can tamper with the location information and modify the user location information to be within the legal operation area. Therefore, if the sending entity of the user location information is the terminal, the user location information is not reliable and cannot represent the true location of the terminal.

(2) In a case where the source of the user location information is the terminal, it is determined that the user location information is not reliable.

In the embodiments of the disclosure, in a case where the sending entity of the user location information may not be the terminal, but the sending entity generates the location information according to information sent by the terminal, that is, the location information generated by the sending entity originates from the terminal, it is determined that the user location information is not reliable.

Because the terminal may customize the user location information it sent, even if the actual location of the terminal is not within the legal operation area of the current network, the terminal can tamper with the location information and modify the user location information to be within the legal operation area. Therefore, if the user location information originates from the terminal and is forwarded to the first network element by other devices (such as the base station), the user location information is not reliable and cannot represent the true location of the terminal.

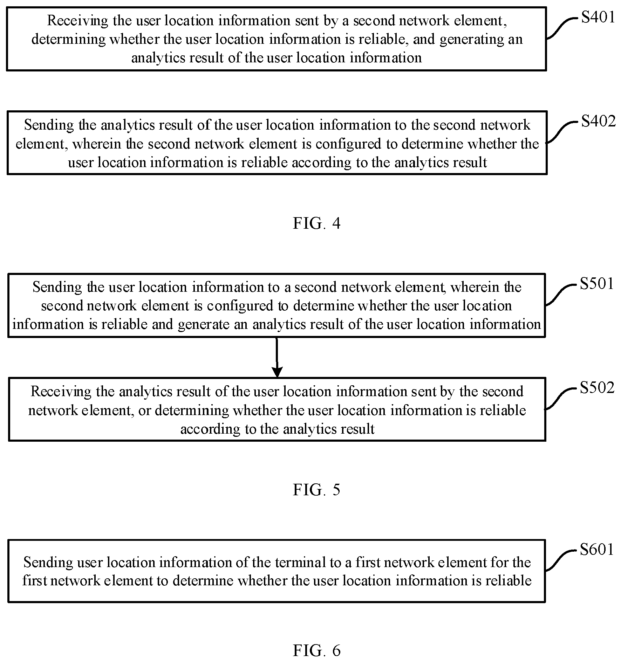

FIG. 4 is a flowchart of a method for determining reliability of user location information according to an embodiment of the disclosure. The method is performed by a first network element, and the first network element is a network data analytics function (NWDAF). As illustrated in FIG. 4, the method may include, but is not limited to, the following steps.

At step S401, the user location information sent by a second network element is received, it is determined whether the user location information is reliable, and an analytics result of the user location information is generated.

In this embodiment, the second network element is an AMF or an MME. When the second network element needs to determine whether the user location information is reliable, the second network element sends the user location information to the first network element. The first network element analyzes and determine whether the user location information is reliable according to a trajectory corresponding to the user location information and then generate the analytics result.

At step S402, the analytics result of the user location information is sent to the second network element, in which the second network element is configured to determine whether the user location information is reliable according to the analytics result.

In an embodiment, in a case where the second network element is an AMF or an MME, the method includes at least one of the following step (1) or step (2).
(1) In a case where the sending entity of the user location information is the terminal, it is determined that the user location information is not reliable.

In the embodiment of the disclosure, in the case where the sending entity of the user location information is the terminal, it is determined that the user location information is not reliable.

Because the terminal may customize the user location information it sent, even if the actual location of the terminal is not within the legal operation area of the current network, the terminal can tamper with the location information and modify the user location information to be within the legal operation area. Therefore, if the sending entity of the user location information is the terminal, the user location information is not reliable and cannot represent the true location of the terminal.

(2) In a case where the source of the user location information is the terminal, it is determined that the user location information is not reliable.

In the embodiments of the disclosure, in a case where the sending entity of the user location information may not be the terminal, but the sending entity generates the location information according to information sent by the terminal, that is, the location information generated by the sending entity originates from the terminal, it is determined that the user location information is not reliable

Because the terminal may customize the user location information it sent, even if the actual location of the terminal is not within the legal operation area of the current network, the terminal can tamper with the location information and modify the user location information to be within the legal operation area. Therefore, if the user location information originates from the terminal, the user location information is not reliable and cannot represent the true location of the terminal.

FIG. 5 is a flowchart of a method for determining reliability of user location information according to an embodiment of the disclosure. The method is performed by a first network element, and the first network element is an AMF or an MME. As illustrated in FIG. 5, the method may include, but is not limited to, the following steps.

At step S501, the user location information is sent to a second network element, in which the second network element is configured to determine whether the user location information is reliable and generate an analytics result of the user location information.

In the embodiments of the disclosure, the second network element is an NWDAF. In the case where the first network element is the AMF or the MME, the first network element may send the user location information to the second network element, so that the second network element may analyze the user location information and determine whether the user location information is reliable according to the trajectory corresponding to the user location information, and then generate the analytics result.

At step S502, the analytics result of the user location information sent by the second network element is received, or it is determined whether the user location information is reliable according to the analytics result.

In the embodiments of the disclosure, the second network element feeds back the analytics result to the first network element after completing the analysis. The first network element then determines whether the user location information is reliable according to the analytics result.

In some embodiments, obtaining the reliable location information of the terminal through the positioning procedure, includes:
sending a positioning request to a location management function (LMF), and indicating that the location information is used for location verification, so as to obtain the reliable location information of the terminal.

In the embodiments of the disclosure, if it is determined that the user location information is not reliable, it is necessary to re-acquire reliable location information. In detail, the first network element may send the positioning request to the LMF and indicates, through indication information, that the location information is used for the location verification. The LMF calls a corresponding positioning procedure according to the indication information, and feedback the reliable location information of the terminal to the first network element after obtaining the reliable user location information.

It should be noted that the step of obtaining the reliable location information of the terminal through the positioning procedure may be performed in the case where the first network element is the AMF or the MME. In a case where the first network element is an NWDAF, the first network element will not perform the above step. Instead, the first network element notifies the AMF or the MME of the result that the user location information is not reliable by sending a message, so that the AMF or the MME can perform the above step of obtaining the reliable location information of the terminal through the positioning procedure.

FIG. 6 is a flowchart of a method for determining reliability of user location information according to an embodiment of the disclosure. The method is performed by a terminal. As illustrated in FIG. 6, the method may include, but is not limited to, the following steps.

At step S601, user location information of the terminal is sent to a first network element for the first network element to determine whether the user location information is reliable.

In the embodiments of the disclosure, the user location information of the terminal is used to indicate the location of the terminal for the first network element. The user location information may be information used for registration during a process of the terminal accessing a 5G network via a satellite, or information obtained through a locating procedure during a positioning procedure of the terminal and used for indicating the location of the terminal.

In a possible embodiment, the user location information may be carried by a registration request signaling. The registration request signaling is sent to the first network element through the terminal or the base station, and the first network element parses the registration request signaling after receiving it to obtain the user location information therein.

It should be noted that a sending entity of the user location information is not limited to the terminal, but may also be a signal transmitting device such as a base station. The specific content of the user location information and the specific operations performed by the first network element on the user location information are described in detail in the above embodiments, and will not be repeated here.

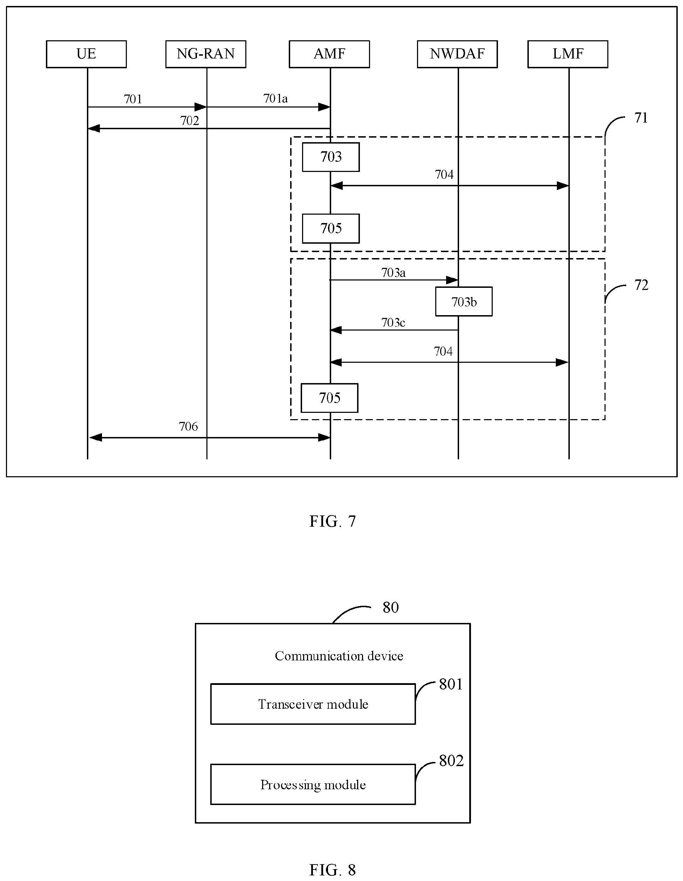

FIG. 7 is a flowchart of a method for determining reliability of user location information according to an embodiment of the disclosure. As illustrated in FIG. 7, performing entities, such as a UE, a next generation radio access network (NG-RAN), an AMF, an NWDAF and an LMF, are involved in a process of determining reliability of location information. The specific processes are provided below.

At step 701, the UE accesses a 5G network via a satellite and initiates a registration process.

The embodiment describes a process of determining the reliability of the user location information during a process of the UE accessing the 5G network via the satellite. In this embodiment, the first network element is the AMF, and the second network element is the NWDAF.

At step 701a, when sending a registration request to the AMF, upon the registration request message reaching a gNB, the gNB determines a TA where the UE is located according to location information sent by a user, and sends a TAI corresponding to the TA together with the registration request message to the AMF. The TAI may be used as location information identifying the location of the UE.

At step 702, the AMF accepts a registration of the UE and returns a registration acceptance message to the UE.

During the execution of the above step 702, a set of steps in the dashed area 71 in the figure may be executed simultaneously.

At step 703, the AMF determines that the location information originates from the gNB, or that the location information from the gNB is generated according to the information sent by the UE. The AMF determines that the location information is not reliable according to an operation strategy.

At step 704, when determining that the location information is not reliable, the AMF initiates a positioning request to the LMF and obtains reliable UE location information from the LMF.

At step 705, after receiving the reliable UE location information from the LMF, the AMF performs location verification according to the reliable UE location information, and determines whether the UE, at the location identified by the reliable location information, is allowed to access the currently accessed PLMN. If the UE is not allowed to access the currently accessed PLMN, step 706 is executed.

Alternatively, during the execution of the above step 702, a set of steps in the dashed area 72 in the figure may be executed simultaneously.

At step 703a, after receiving the location information, the AMF initiates a request message to the NWDAF to determine whether the location information is reliable, and the request message contains the location information of the UE.

At step 703b, the NWDAF determines whether the location identified by the location information is reliable, that is, whether the location can represent the current location of the UE, by combining analysis information such as a moving trajectory of the UE or a UE location prediction.

At step 703c, the NWDAF returns a determined result of whether the location information is reliable to the AMF.

At step 704, if the location information received by the AMF from the NWDAF is not reliable, the AMF initiates a positioning request to the LMF to obtain reliable UE location information from the LMF.

At step 705, the AMF performs the location verification according to the reliable UE location information, determines whether the UE, at the location identified by the reliable location information, is allowed to access the currently accessed PLMN. If the UE is not allowed to access the currently accessed PLMN, step 706 is executed.

At step 706, if a result of the location verification performed by the AMF is that the UE is prohibited from accessing the PLMN at the current location, the AMF initiates a deregistration process to the UE.

It should be noted that the above process of determining the reliability of the user location information may be applied not only to the determination of the location information obtained from the UE or the base station in scenarios where the UE accesses via a satellite, but also to the determination of the location information obtained through the positioning procedure. The embodiment shown in FIG. 7 does not constitute a limitation of the application scenario for the process of determining the reliability of the user location information.

In the above embodiments of the disclosure, the methods provided by the embodiments of the disclosure are introduced from perspectives of the terminal and the network device, respectively. In order to realize the functions in the methods provided by the embodiments of the disclosure, the terminal and the network device may include a hardware structure and a software module, and realize the above functions in the form of the hardware structure, the software module, or a combination of the hardware structure and the software module. A certain function of the above functions may be implemented in the form of the hardware structure, the software module, or the combination of the hardware structure and the software module.

FIG. 8 is a schematic diagram of a communication apparatus 80 according to an embodiment of the disclosure. The communication apparatus 80 shown in FIG. 8 may include a transceiver module 801 and a processing module 802. The transceiver module 801 may include a sending module and/or a receiving module. The sending module is used for realizing a sending function, and the receiving module is used for realizing a receiving function. The transceiver module 801 may realize the sending function and/or the receiving function.

The communication apparatus 80 may be a terminal (e.g., the terminal in the aforementioned method embodiments), an apparatus in the terminal, or an apparatus that may be used together with the terminal. Alternatively, the communication apparatus 80 may be a network device, an apparatus in the network device, or an apparatus that may be used together with the network device.

If the communication apparatus 80 is a first network element, it includes:
a transceiver module, configured to obtain user location information of a terminal; and
a processing module, configured to determine whether the user location information is reliable according to one or more of the following information:
   a sending entity of the user location information;
   a source of the user location information;
   a trajectory corresponding to the user location information; and
   an analytics result of the user location information.

If the communication apparatus 80 is a terminal,
the communication apparatus 80 sends user location information of the terminal to a first network element, so that the first network element determines whether the user location information is reliable.

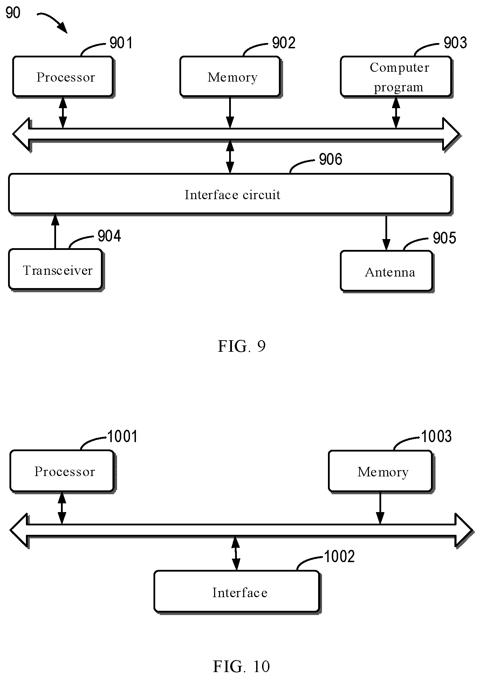

FIG. 9 is a schematic diagram of a communication apparatus 90 according to another embodiment of the disclosure. The communication apparatus 90 may be a network device, a terminal (e.g., the terminal in the above method embodiments), or a chip, a chip system or a processor that supports the network device to realize the above-described method, or a chip, a chip system or a processor that supports the terminal to realize the above-described method. The device is used to realize the method described in the above method embodiments with reference to the descriptions of the above-described method embodiments.

The communication apparatus 90 may include one or more processors 901. The processor 901 may be a general purpose processor or a dedicated processor, such as, a baseband processor or a central processor. The baseband processor is used for processing communication protocols and communication data. The central processor is used for controlling communication apparatuses (e.g., base station, baseband chip, terminal, terminal chip, CU or DU), executing computer programs, and processing data of the computer programs.

Optionally, the communication apparatus 90 may further include one or more memories 902 on which a computer program 903 may be stored. When the processor 901 executes the computer program 903, the communication apparatus 90 is caused to perform the method described in the above method embodiments. Optionally, data may also be stored in the memory 902. The communication apparatus 90 and the memory 902 may be provided separately or may be integrated together.

Optionally, the communication apparatus 90 may also include a transceiver 904 and an antenna 905. The transceiver 904 may be referred to as transceiver unit, transceiver machine, or transceiver circuit, for realizing a transceiver function. The transceiver 904 may include a receiver and a transmitter. The receiver may be referred to as receiver machine or receiving circuit, for realizing a receiving function. The transmitter may be referred to as transmitter machine or transmitting circuit, for realizing a transmitting function.

Optionally, the communication apparatus 90 may also include one or more interface circuits 906. The interface circuits 906 are used to receive code instructions and transmit the code instructions to the processor 901. The processor 901 runs the code instructions to cause the communication apparatus 90 to perform the method described in the method embodiments.

If the communication apparatus 90 is a first network element, the processor 901 is configured to perform the steps in FIG. 2, FIG. 3, FIG. 4, or FIG. 5.

In an implementation, the processor 901 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 901 may store a computer program 903 that may be run by the processor 901 and may cause the communication apparatus 90 to perform the method described in the method embodiments above. The computer program 903 may be solidified in the processor 901, in which case the processor 901 may be implemented by hardware.

In an implementation, the communication apparatus 90 may include circuits. The circuits may implement the sending, receiving, or communicating function in the preceding method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver may be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the descriptions of the above embodiments may be a network device or a terminal (e.g., the terminal in the above method embodiments), but the scope of the communication apparatus described in the disclosure is not limited thereto, and the structure of the communication apparatus may not be limited by FIG. 9. The communication apparatus may be a stand-alone device or may be part of a larger device. For example, the communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

The case that the communication apparatus is a chip or a chip system can refer to the schematic diagram of the chip shown in FIG. 10. The chip shown in FIG. 10 includes a processor 1001 and an interface 1002. There may be one or more processors 1001, and there are multiple interfaces 1002.

Optionally, the chip further includes a memory 1003 for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The embodiments of the disclosure also provides a system for determining reliability of user location information. The system includes: a communication apparatus as a terminal (e.g., the terminal in the aforementioned method embodiments) and a communication apparatus as a network device in the aforementioned embodiment of FIG. 7. Alternatively, the system includes: a communication apparatus as a terminal in the aforementioned embodiment of FIG. 8 (e.g., the terminal in the aforementioned method embodiments) and a communication apparatus as a network device.

The disclosure also provides a readable storage medium having an instruction stored thereon. When the instruction is executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiment of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in the disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in the disclosure may not be configured. For another example, the above tables may be adjusted appropriately, such as splitting, combining, and the like. The names of the parameters shown in the titles of the above tables may be other names that may be understood by the communication apparatus, and the values or representations of the parameters may be other values or representations that may be understood by the communication apparatus. Each of the above tables may also be implemented with other data structures, such as, arrays, queues, containers, stacks, linear tables, pointers, chained lists, trees, graphs, structures, classes, heaps, and Hash tables.

The term "predefine" in the disclosure may be understood as define, pre-define, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above are only specific implementations of the disclosure, but the scope of protection of the disclosure is not limited thereto. Those skilled in the art familiar to the technical field may easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. A method for determining reliability of user location information, performed by a first network element, comprising:
obtaining user location information of a terminal; and
determining whether the user location information is reliable.

2. The method of claim 1, wherein determining whether the user location information is reliable based on at least one of:
a sending entity of the user location information;
a source of the user location information;
a trajectory corresponding to the user location information; or
an analytics result of the user location information.

3. The method of claim 1, further comprising:
in response to determining that the user location information is reliable, performing user location verification based on the user location information.

4. The method of claim 1, further comprising:
in response to determining that the user location information is not reliable, obtaining reliable location information of the terminal through a positioning procedure; and
performing, according to the reliable location information, user location verification for the terminal accessing to a current network.

5. The method of claim 1, wherein obtaining the user location information of the terminal comprises:
receiving information for identifying a location of the terminal sent by a base station, wherein the information indicates the user location information; and
receiving the user location information sent by the terminal.

6. The method of claim 1, wherein
the first network element is selected from at least one of:
an access and mobility management function (AMF);
a mobility management entity (MME); or
a network data analytics function (NWDAF).

7. The method of claim 6, wherein in a case where the first network element is the AMF or the MME, the method comprises at least one of:
in a case where a sending entity of the user location information is the terminal, determining that the user location information is not reliable; or
in a case where a source of the user location information is the terminal, determining that the user location information is not reliable.

8. The method of claim 6, wherein in a case where the first network element is the NWDAF, the method comprises:
receiving the user location information sent by a second network element, determining whether the user location information is reliable, and generating an analytics result of the user location information; and
sending the analytics result of the user location information to the second network element, wherein the second network element is configured to determine whether the user location information is reliable according to the analytics result.

9. The method of claim 6, wherein in a case where the first network element is the AMF or the MME, the method further comprises:
sending the user location information to a second network element, wherein the second network element is configured to determine whether the user location information is reliable and generate an analytics result of the user location information; and
receiving the analytics result of the user location information sent by the second network element, or determining whether the user location information is reliable according to the analytics result.

10. The method of claim 8, wherein in a case where the second network element is an AMF or an MME, the method comprises at least one of:
in a case where a sending entity of the user location information is the terminal, determining that the user location information is not reliable; or
in a case where a source of the user location information is the terminal, determining that the user location information is not reliable.

11. The method of claim 4, wherein obtaining the reliable location information of the terminal through the positioning procedure comprises:
sending a positioning request to a location management function (LMF), and indicating that the user location information is used for location verification, to obtain the reliable location information of the terminal.

12. A communication apparatus, comprising:
a transceiver module, configured to obtain user location information of a terminal; and
a processing module, configured to determine whether the user location information is reliable.

13. A communication apparatus, comprising a processor and a memory, wherein the memory stores a computer program, and the processor executes the computer program stored in the memory to cause the apparatus to execute the method according to any one of claims 1-11.

14. A communication apparatus, comprising: a processor and an interface circuit;
wherein the interface circuit is configured to receive code instructions and transmit the code instructions to the processor; and
the processor is configured to run the code instructions to execute the method according to any one of claims 1-11.

15. A computer readable storage medium for storing instructions, wherein in a case that the instructions are executed, the method according to any one of claims **1-11** is implemented.
